# EUROPÄISCHE PATENTSCHRIFT

(11) **EP 2 713 718 B1**
(45) Veröffentlichungstag und Bekanntmachung des Hinweises auf die Patenterteilung: **20.09.2017**
(21) Anmeldenummer: 12743877.8
(22) Anmeldetag: 18.05.2012
(51) Int. Cl.: A01N 25/04, A01P 7/00, C12N 1/04, A01N 25/30, A01N 63/04, A01N 63/00

(54) **FLÜSSIGES PRÄPARAT FÜR DEN BIOLOGISCHEN PFLANZENSCHUTZ, VERFAHREN ZU SEINER HERSTELLUNG UND SEINE VERWENDUNG**
LIQUID COMPOSITION FOR BIOLOGICAL PEST MANAGEMENT, METHOD FOR PREPARATION AND USE
COMPOSITION LIQUIDE POUR LA PROTECTION BIOLOGIQUE DES PLANTES, MÉTHODE POUR LA PREPARATION ET UTILISATION

(30) Priorität: 27.05.2011 DE 102011102632
(43) Veröffentlichungstag der Anmeldung: 09.04.2014
(73) Patentinhaber: Bayer CropScience Biologics GmbH, 23970 Wismar (DE)
(72) Erfinder: LÜTH, Peter, 23970 Wismar (DE)
(74) Vertreter: BIP Patents
(86) Internationale Anmeldenummer: PCT/DE2012/000523
(87) Internationale Veröffentlichungsnummer: WO 2012/163322

(56) Entgegenhaltungen:
- WASEEM AKBAR ET AL: "Efficacy of Beauveria bassiana for Red Flour Beetle When Applied with Plant Essential Oils or in Mineral Oil and Organosilicone Carriers", JOURNAL OF ECONOMIC ENTOMOLOGY, Bd. 98, Nr. 3, 1. Juni 2005 (2005-06-01), Seiten 683-688, XP55039328, ISSN: 0022-0493, DOI: 10.1603/0022-0493-98.3.683 in der Anmeldung erwähnt
- MUTIMURA C GATARAYIHA ET AL: "Effects of adjuvant and conidial concentration on the efficacy of Beauveria bassiana for the control of the two spotted spider mite, Tetranychus urticae", EXPERIMENTAL AND APPLIED ACAROLOGY, KLUWER ACADEMIC PUBLISHERS, DO, Bd. 50, Nr. 3, 18. September 2009 (2009-09-18), Seiten 217-229, XP019766412, ISSN: 1572-9702 in der Anmeldung erwähnt
- JUSTIN L. HATTING ET AL: "Efficacy of Beauveria bassiana (Hyphomycetes) for control of Russian wheat aphid (Homoptera: Aphididae) on resistant wheat under field conditions", BIOCONTROL SCIENCE AND TECHNOLOGY, Bd. 14, Nr. 5, 1. August 2004 (2004-08-01) , Seiten 459-473, XP55039062, ISSN: 0958-3157, DOI: 10.1080/09583150410001683501
- MUTIMURA C GATARAYIHA ET AL: "Effects of crop type on persistence and control efficacy of Beauveria bassiana against the two spotted spider mite", BIOCONTROL, KLUWER ACADEMIC PUBLISHERS, DO, Bd. 55, Nr. 6, 20. Juni 2010 (2010-06-20), Seiten 767-776, XP019858591, ISSN: 1573-8248, DOI: 10.1007/S10526-010-9293-Y
- Henry Walforth Sánchez ET AL: "EVALUATION OF ENTOMOPATOGENIC FUNGI UNDER LAB CONDITIONS TO CONTROL THE MACADAMIA PEST Antiteuchus sp.", , 25. November 2010 (2010-11-25), Seiten 1-16, XP55039323, Colombia Gefunden im Internet: URL:http://www.oriusbiotecnologia.com/resu ltados-investigacion-aplicada/cat_view/47- resultados-de-investigacion-aplicada-a-des arrollo/101-macadamia [gefunden am 2012-09-27]
- Steven E Lindow ET AL: "Management of Frost Injury, Fire blight, and Fruit Russeting of Pear Using Biological and Cultural Methods", , 1. Oktober 2007 (2007-10-01), Seiten 1-7, XP55039301, Department of Plant and Microbial Biology, University of California Berkeley, CA, U.S.A. Gefunden im Internet: URL:http://www.calpear.com/_pdf/research-r eports/05report/1_plant.pdf [gefunden am 2012-09-26]
- A B Ili Bazilah ET AL: "Effect of Carrier and Temperature on the Viability of Burkholderia sp. (UPMB3) and Pseudomonas sp. (UPMP3) during Storage", INTERNATIONAL JOURNAL OF AGRICULTURE & BIOLOGY, 1. April 2011 (2011-04-01), Seiten 198-202, XP55039223, Gefunden im Internet: URL:http://www.fspublishers.org/ijab/past- issues/IJABVOL_13_NO_2/8.pdf [gefunden am 2012-09-26]
- PANLADA TITTABUTR ET AL: "Growth, Survival and Field Performance of Bradyrhizobial Liquid Inoculant Formulations with Polymeric Additives", SCIENCEASIA, Bd. 33, Nr. 1, 1. Januar 2007 (2007-01-01) , Seiten 69-77, XP55031536, ISSN: 1513-1874, DOI: 10.2306/scienceasia1513-1874.2007.33.069
- MARTA ALBAREDA ET AL: "Alternatives to peat as a carrier for rhizobia inoculants: Solid and liquid formulations", SOIL BIOLOGY AND BIOCHEMISTRY, Bd. 40, Nr. 11, 1. November 2008 (2008-11-01), Seiten 2771-2779, XP55039244, ISSN: 0038-0717, DOI: 10.1016/j.soilbio.2008.07.021
- Çigdem Küçük ET AL: "Effect of formulation on the viability of biocontrol agent, Trichoderma harzianum conidia", African Journal of Biotechnology, 1. Juni 2005 (2005-06-01), Seiten 483-486,, XP55039245, Gefunden im Internet: URL:http://www.academicjournals.org/ajb/PD F/Pdf2005/Jun/Küçük and Kivanç.pdf [gefunden am 2012-09-26]
- TORRES R ET AL: "Liquid formulation of the biocontrol agent Candida sake by modifying water activity or adding protectants", JOURNAL OF APPLIED MICROBIOLOGY, OXFORD, GB, Bd. 94, Nr. 2, 1. Januar 2003 (2003-01-01) , Seiten 330-339, XP002372960, ISSN: 1364-5072, DOI: 10.1046/J.1365-2672.2003.01843.X
- "Break-Thru S240", , 1. März 2009 (2009-03-01), Seiten 1-2, XP55039057, Gefunden im Internet: URL:http://www.break-thru.com/sites/dc/Dow nloadcenter/Evonik/Product/BREAK-THRU/brea k-thru-s-240.pdf [gefunden am 2012-09-25]
- ALVES ROBERTO T ET AL: "Effects of different formulations on viability and medium-term storage of Metarhizium anisopliae Conidia", NEOTROPICAL ENTOMOLOGY, SOCIEDAD ENTOMOLOGICA DO BRASIL, SAO PAULO, BR, Bd. 31, Nr. 1, 1. Januar 2002 (2002-01-01) , Seiten 91-99, XP002333137, ISSN: 1519-566X, DOI: 10.1590/S1519-566X2002000100013
- D Moore ET AL: "Long-term storage of Metarhizium flavoviride conidia in oil formulations for the control of locusts and grasshoppers", Biocontrol Science and Technology, 1. Januar 1995 (1995-01-01), Seiten 193-199, XP55039339, DOI: 10.1080/09583159550039918 Gefunden im Internet: URL:http://www.m3cg.us/hopper/system/files /sites/default/files/private/pdf/MIM-12899 _Grasshopper.pdf [gefunden am 2012-09-27]
- H.E. ROY ET AL: "BIZARRE INTERACTIONS AND ENDGAMES: Entomopathogenic Fungi and Their Arthropod Hosts", ANNUAL REVIEW OF ENTOMOLOGY, Bd. 51, Nr. 1, 1. Januar 2006 (2006-01-01) , Seiten 331-357, XP55039372, ISSN: 0066-4170, DOI: 10.1146/annurev.ento.51.110104.150941
- "CAS-No. 134180-76-0, Break Thru S240" In: "CAS-No. 134180-76-0, Break Thru S240", 14 June 1991 (1991-06-14), Chemical Abstracts Service, U.S.A., XP055231227, pages 1-3,

## Beschreibung

Die Erfindung betrifft ein lagerfähiges flüssiges Präparat für den biologischen Pflanzenschutz bestehend aus einer wasserlöslichen Suspension, die Pilzsporen, Pilzkonidien, Chlamydosporen oder Sklerotien eines Pilzes oder eine Mischung daraus und ein polyethermodifiziertes Trisiloxan umfasst, Verfahren zu seiner Herstellung und seine Verwendung. Anwendungsgebiet ist die Land- und Forstwirtschaft einschließlich des Garten- und Obstbaus sowie der Kultur von Zierpflanzen und die Anlage und Pflege von Rasenflächen. Dabei zielt die Erfindung insbesondere auf den biologischen Pflanzenschutz, die biologische Pflanzenstärkung und die biologische Bodenverbesserung.
Die Anwendung von Präparaten, die auf der Basis von mikroskopischen Pilzen oder anderen Mikroorganismen beruhen, ermöglicht einen biologischen Pflanzenschutz und damit eine vorbeugende oder kurative Bekämpfung von Pflanzenkrankheits- und Schaderregern aufgrund gegen diese Krankheits- und Schaderreger gerichteter ökologischer Wirkprinzipien.
Andere Mikroorganismen, wie Trichoderma spp. , Pythium oligandrum, Bacillus spp., Pseudomonas spp. und Streptomyces spp. , sind in der Lage, Reaktionen in den Pflanzen hervorzurufen, welche zu einer erhöhten Widerstandsfähigkeit gegen Krankheitserreger oder andere Stressfaktoren, wie Trockenheit, schlechte Nährstoffversorgung, ungünstige pH-Werte oder hohe Salzgehalte im Boden, führen.

Wieder andere Mikroorganismen, wie Trichoderma spp., Penicillium bilaii, Azotobacter spp., Azotomonas spp., Azospirillum spp. und Rhizobium spp., führen zu einer Verbesserung der Nährstoffverfügbarkeit im Boden oder direkt an der Pflanzenwurzel.

Solche Präparate sind umweltschonend und bedienen sich natürlicher Regulationsmechanismen, welche sich im Laufe der Evolution in der Natur entwickelt haben.
Aus der Literatur sind verschiedene Formulierungen bzw. Präparate bekannt, in denen pilzliche Mikroorganismen Agenzien in biologischen Pflanzenschutzmitteln, biologischen Pflanzenstärkungsmitteln und biologischen Düngemitteln darstellen. So werden Mikroorganismen z.B. als wasserdispergierbare Granulate (WG), wasserdispergierbare Pulver (WP), Öldispersionen (OD) oder Suspensionskonzentrate (SC) formuliert (Anonymus, 2005).

Die Formulierung muss gewährleisten, dass die Produkte eine gute Haltbarkeit aufweisen. Das heißt, die Mikroorganismen sollten ihre Vitalität möglichst auch bei hohen Temperaturen lange erhalten können.

Die Produkte sollten eine gute Löslichkeit/Dispergierbarkeit in Wasser aufweisen, damit die Anwendung mittels Sprühapplikation oder mit Hilfe des Bewässerungssystems erfolgen kann und die Mikroorganismen (z.B. Pilzsporen oder Bakterienzellen) gut im Boden, an der Pflanze oder am Schadorganismus verteilt werden können. In diesem Zusammenhang ist insbesondere wichtig, dass die Mikroorganismen in der zur Anwendung kommenden wässerigen Suspension nicht in Aggregaten miteinander verklumpt sind, sondern einzeln (z.B. Pilzsporen oder Bakterienzellen schwimmen von einander getrennt in einer Suspension) vorkommen. Beim Vorkommen von Aggregaten in der zur Anwendung kommenden wässerigen Suspension kann es zur Verstopfung der Düsen der Pflanzenschutzspritze kommen, oder die Verteilung des biologischen Wirkstoffes im Boden, an der Pflanze oder am Schadorganismus ist inhomogen, was die Wirkung des Produktes negativ beeinflusst.

Insbesondere Mikroorganismen, die in den Boden eingewässert werden müssen, um ihre Wirkung voll zu entfalten (z.B. zur Bekämpfung von Nematoden, Bodeninsekten oder bodenbürtigen Krankheitserregern) verlieren ihre Wirkung, da sie im Falle des Vorhandenseins größerer Aggregate in der Anwendungssuspension bereits in den obersten Bodenschichten durch die Bodenstruktur abgefiltert werden.

Verschiedene Mikroorganismen bzw. Organe von Mikroorganismen, insbesondere Pilzkonidien der Gattungen Beauveria, Isaria, Nomuraea, Metarhizium, Paecilomyces und Penicillium sind wasserabweisend. Diese Eigenschaft der Mikroorganismen erschwert zum Teil zusätzlich deren Anwendung. Sie lassen sich schlecht in Wasser suspendieren, schlecht auf der Oberfläche von Pflanzen oder von Schadinsekten verteilen und schwer in den Boden einwässern.
Der Nachteil einiger wasserdispergierbarer Pulver besteht darin, dass der Abgang von Stäuben bei ihrer Anwendung nur schwer verhindert werden kann, sodass es zu einer Kontamination der Anwender oder der Umgebung kommen kann.
Viele mikrobiologische Präparate enthalten aufgrund ihrer Formulierung nur eine geringe Quantität ihres wirksamen Agens. So gibt es Präparate, die nur 1 x 10⁷ oder 1 x 10⁸ lebende Pilzkonidien pro Gramm enthalten. Bei einer für eine gute Wirkung erforderliche Mindestaufwandmenge, die in vielen Fällen bei 1 x 10¹¹ oder 1 x 10¹² und mehr Pilzkonidien pro Hektar liegt, verursacht die geringe Wirkstoffkonzentration in den Präparaten hohe Kosten (Herstellungs-, Lager-, Transport- und Anwendungskosten).

Lebende Mikroorganismen unterscheiden sich von chemisch-synthetischen Wirkstoffen unter anderem hinsichtlich der Haltbarkeit, da sie in herkömmlichen verwendeten Lösungsmitteln nicht stabil sind. Werden sie ungünstigen Bedingungen ausgesetzt, verlieren sei ihre Keimfähigkeit und gehen ein. Dies geschieht bei längerer Lagerung, bei Inkubation unter höheren Temperaturen, beim Kontakt mit chemischen Substanzen u. ä.

Moore et al. (Biocontrol Science and Technology 1995, S. 193-199) beschreiben die Lagerung von Konidien von Metarhizium in Mineralöl und in verschiedenen Pflanzenölen. Die Lagerstabilität schwankt mit der Natur des Öles und kann durch die Gegenwart von Antioxidantien sowohl positiv als auch negativ beeinflusst werden. Die Erfindung hat deshalb die Aufgabe, ein lagerfähiges flüssiges Präparat zu entwickeln, das Pilzsporen, Pilzkonidien, Chlamydosporen, oder Sklerotien eines Pilzes oder Mischungen daraus enthält. Es soll über eine längere Zeit (mindestens 12 Monate) unter geringem technischen Aufwand und unter Beibehaltung seiner Vitalität und Aggressivität bei relativ hoher Temperatur lagerfähig sein. Ferner soll es gut in Wasser suspendierbar und gut an der Pflanze, dem Zielorganismus oder im Boden verteilbar sein. Das flüssige Präparat soll außerdem hoch konzentriert sein.

Die Erfindung wird gemäß den Ansprüchen 1, 3, 13 und 15 realisiert. Weitere vorteilhafte Ausgestaltungen, Aspekte und Details der Erfindung ergeben sich aus den Unteransprüchen, der Beschreibung und den Beispielen.

Ausgangspunkt der Erfindung ist der überraschende Befund, dass die Einmischung von lebenden Mikroorganismen oder ihren Organen in polyethermodifiziertes Trisiloxan zu einem solchen flüssigen Präparat führt. Es hat sich weiterhin überraschend herausgestellt, dass in polyethermodifiziertem Trisiloxan eingemischte, d.h. suspendierte lebende Mikroorganismen ihre Vitalität behalten. Es hat sich weiterhin als besonders überraschend herausgestellt, dass die suspendierten lebenden Mikroorganismen ihre Vitalität über 12 Monate Lagerung behalten. Außerordentlich überraschend war auch, dass Pilzsporen in 100%igem polyethermodifiziertem Trisiloxan suspendiert werden können, ohne dadurch abzusterben. Noch überraschender war es, dass die Lagerfähigkeit der Sporen durch die Suspendierung in einem polyethermodifiziertem Trisiloxan sogar verbessert wird.

Durch die Suspension der Pilzsporen, Pilzkonidien, Chlamydosporen oder Sklerotien eines Pilzes oder einer Mischung daraus in polyethermodifiziertem Trisiloxan entsteht ein Dispersionskonzentrat (DC). Dabei ist das erfindungsgemäße flüssige Präparat gekennzeichnet durch eine Suspension, die aus Pilzsporen, Pilzkonidien, Chlamydosporen, Sklerotien, und polyethermodifiziertem Trisiloxan besteht.
Die Erfindung ist vorteilhaft, weil die Lagerfähigkeit des biologischen Pflanzenschutzmittels gegenüber den Produkten des Stands der Technik entscheidend verbessert wird. Die Erfindung ist auch deshalb vorteilhaft, weil die wasserabweisenden Mikroorganismen oder Teile davon sich in reinem polyethermodifizierten Trisiloxan wesentlich besser suspendieren lassen als in Wasser, so dass es im Gegensatz zu wässrigen Lösungen nicht zu Verklumpungen der Mikroorganismen kommt. Bei einer zur Anwendung vorzunehmenden Lösung/Suspendierung des Produktes in Wasser bleiben diese Eigenschaften erhalten, sodass die Verteilung der Mikroorganismen oder Organe von Mikroorganismen auf den Pflanzen oder im Boden gleichmäßig erfolgen kann. Ein weiterer Vorteil der Erfindung besteht darin, dass sich die in reinem polyethermodifizierten Trisiloxan suspendierten Mikroorganismen oder deren Teile mit Wasser gut mischen lassen und damit verschiedene Anwendungskonzentrationen herstellbar sind.

Aus der Literatur ist bekannt, dass zum Beispiel Pilzsporen in wässerigen Suspensionen unter Verwendung von polyethermodifiziertem Trisiloxan, wie es zum Beispiel in den Produkten Silwet oder Break-Thru enthalten ist, angewandt werden (Akbar et al., 2005; Gatarayiha et al., 2010; Legaspi et al., 2000; Wekesa et al., 2005). Hier wird das polyethermodifizierte Trisiloxan aber lediglich zur Verbesserung der Applizierbarkeit der Konidien unmittelbar vor ihrer Anwendung in das Wasser oder die wässerige Konidiensuspension eingemischt. Das polyethermodifizierte Trisiloxan dient somit lediglich als Netz- und/oder Haftmittel. Die Verwendung von nichtionischen Tensiden wird auch in DE102004011007 erwähnt, jedoch nur im Kontext einer Formulierung auf Ölbasis und nicht als reine Tenside. Polyethermodifizierte Trisiloxane als Form der nichtionischen Tenside finden in Pflanzenschutzmitteln Verwendung, allerdings zur Suspendierung von chemisch-synthetischen Wirkstoffen (DE10036003A1, US6117816A). Es war jedoch bisher nicht bekannt, dass Mikroorganismen oder ihre Organe in einem reinen polyethermodifizierten Trisiloxan formuliert und über eine längere Zeit in vitalem Zustand gelagert werden können. Weiterhin ist ein biologisches Pflanzenschutzmittel bestehend aus einer Formulierung von lebenden Mikroorganismen als wirksames Agens in einem reinen polyethermodifizierten Trisiloxan bisher nicht bekannt.

Die Erfindung bezieht sich besonders auf ein lagerfähiges flüssiges Präparat für den biologischen Pflanzenschutz umfassend eine Suspension, die aus Pilzsporen, Pilzkonidien, Chlamydosporen oder Sklerotien eines Pilzes oder eine Mischung daraus und einem polyethermodifizierten Trisiloxan besteht.

Dabei ist es bevorzugt, wenn die Pilzsporen, Pilzkonidien, Chlamydosporen oder Sklerotien eines Pilzes oder eine Mischung daraus in dem erfindungsgemäßen flüssigen Präparat eine gegen bestimmte Pflanzenkrankheitserreger gerichtete antagonistische und/oder hyperparasitäre Wirkung aufweisen. Es ist weiterhin bevorzugt, wenn die Pilzsporen, Pilzkonidien, Chlamydosporen oder Sklerotien eines Pilzes oder eine Mischung daraus in dem erfindungsgemäßen flüssigen Präparat eine sich an Pflanzen manifestierende Resistenz induzierende Wirkung, Stresstoleranz induzierende Wirkung oder eine die Nährstoffverfügbarkeit erhöhende Wirkung aufweisen.

Es werden Organe von Pilzen eingesetzt, dies können gemäß der Erfindung Sporen, Konidien, Chlamydosporen, Sklerotien oder eine Mischung der vorgenannten Organe sein. Dabei ist der Einsatz folgender Pilze mit gegen bestimmte Pflanzenkrankheitserreger antagonistischer Wirkung besonders bevorzugt:
*Ampelomyces quisqualis*
*Beauveria bassiana*
*Beauveria brongniartii*
*Clonostachys rosea*
*Coniothyrium minitans*
*Gliocladium catenulatum*
*Isaria* spp.
*Laetisaria arvalis*
*Lecanicillium lecanii*
*Lecanicillium muscarium*
*Metarhizium anisopliae*
*Nomuraea rileyi*
*Paecilomyces lilacinus*
*Phoma macrostoma*
*Pythium oligandrum*
*Talaromyces flavus*
*Teratosperma oligociadum*
*Trichoderma* spp.
*Verticillium biguttafum*

Als Pilze, welche die Nährstoffvertügbarkeit im Boden verbessern bzw. die Widerstandsfähigkeit der Pflanzen gegenüber Stressfaktoren (auch Krankheits- und Schaderreger) erhöhen, werden bevorzugt eingesetzt:
*Penicillium bilaii, Trichoderma* spp. sowie alle Arten, die in die Gruppe der Mykorrhizapilze eingeordnet werden können.

Weiterhin gemäß der Erfindung bevorzugt ist ein flüssiges Präparat, in dem der mikrobiologische Wirkstoff eine Mischung der oben genannten Pilzorgane oder eine Mischung von jeweils zwei dieser Mikroorganismen ist.
Das erfindungsgemäße flüssige Präparat wird wie folgt hergestellt:
Der biologisch aktive Mikroorganismus wird auf einem dafür geeigneten Nährboden nach an sich bekannten Methoden, wie z. B. der Submersfermentation oder der Feststofffermentation, kultiviert. Im Anschluss an die Kultur wird der Mikroorganismus bzw. seine bevorzugt verwendeten Organe vom Kultursubstrat separiert. In einer besonderen Variante wird das von dem Mikroorganismus bewachsenen Kultursubstrat (insbesondere im Falle der Verwendung von festen Kultursubstraten) zuvor getrocknet. In einem anderen Fall kann der Mikroorganismus bzw. seine bevorzugt verwendeten Organe nach seiner Separation vom Kultursubstrat z. B. mit Hilfe der Gefriertrocknung getrocknet werden. Nach der Separation sowie gegebenenfalls Trocknung wird der Mikroorganismus bzw. seine bevorzugt verwendeten Organe in einem polyethermodifizierten Trisiloxan suspendiert. Das Trisiloxan ist bevorzugt mit
   Propylen glycol n-butyl ether (PnB), CAS No. 29387-86-8 (5131-66-8)
   Dipropylen glycol n-butyl ether (DPnB), CAS No. 29911-28-2 (35884-42-5)
   Dipropylen glycol methyl ether acetat (DPMA), CAS No. 88917-22-0
   Tripropylen glycol methyl ether (TPM), CAS No. 25498-49-1 & 20324-33-8
   Propylen glycol methyl ether (PM), CAS No. 107-98-2
   Propylen glycol methyl ether acetat (PMA), CAS No. 108-65-6
   Dipropylen glycol methyl ether (DPM), CAS No. 34590-94-8
   Tripropylen glycol monomethyl ether
   modifiziert.
Besonders bevorzugt ist das polyethermodifizierte Trisiloxan Break-Thru, und ganz besonders bevorzugt das polyethermodifizierte Trisiloxan S240, CAS No. 134180-76-0, mit der chemischen Bezeichnung Oxirane, methyl-, polymer with oxirane, mono(3-(1,3,3,3-tetramethyl-1-((trimethylsilyl)oxy)disiloxanyl)propyl) ether.

Gegebenenfalls erfolgt nach der Kultivierung, vor der Separation des Mikroorganismus bzw. seiner bevorzugt verwendeten Organe eine Aufbereitung des bewachsenen Kultursubstrates durch ein geeignetes Dispergierverfahren oder nach der Trocknung durch ein geeignetes Mahlverfahren. Die Separation des Mikroorganismus bzw. seiner bevorzugt verwendeten Organe erfolgt dann im Anschluss durch an sich bekannte Verfahren, wie Sieb-, Filtrations-, Windsicht-, Dekantier- oder Zentrifugierverfahren.

Erfindungsgemäß wird das Flüssig-Präparat als biologisches Pflanzenschutzmittel, biologisches Pflanzenstärkungsmittel oder biologisches Bodenverbesserungsmittel eingesetzt, wobei es gegebenenfalls je nach beabsichtigtem Anwendungszweck mit Wasser auf die Anwendungskonzentration verdünnt wird. Das Präparat kann in den Boden eingemischt oder eingewässert, direkt auf die Pflanze appliziert oder zur Saatgutbehandlung angewandt werden.

So kann das Präparat mit den Konidien von *Paecilomyces lilacinus* als wirksames Agens für die biologische Bekämpfung von pflanzenparasitären Nematoden eingesetzt werden. Bei Verwendung der Sporen von *Talaromyces flavus* kann das Präparat zur Bekämpfung von Verticillium dahliae, einem Krankheitserreger, der an Baumwolle eine wirtschaftlich bedeutsame Welke hervorruft, verwendet werden. Bei Verwendung der Sporen von *Nomuraea rileyi* kann das Präparat zur Bekämpfung der Raupen verschiedener schädlicher Schmetterlingsarten, wie *Helicoverpa armigera* und *Spodoptera exigua,* eingesetzt werden. Die Anwendung des Präparates unter Verwendung der Konidien von *Penicillium bilaii* erhöht die Verfügbarkeit von mineralischem Phosphor im Boden.
Das erfindungsgemäße flüssige Präparat besitzt eine lange Lagerfähigkeit bei Zimmertemperatur und ist vollständig in Wasser löslich, wobei das wirksame mikrobielle Agens in der Wasser-polyethermodifiziertes Trisiloxan-Lösung suspendiert wird.
So konnte nach einer zwölfmonatigen Lagerung des Präparates bei Zimmertemperatur noch eine Vitalität der Konidien von *P*. *lilacinus* von 92,3 % festgestellt werden. Die Wirkung des Präparates war noch ausreichend, um die Population des Nematoden *Meloidogyne ingognita* im Boden deutlich zu verringern. Damit ist das Präparat für eine kommerzielle Anwendung hervorragend geeignet.
Die Lagerung und der Transport des Präparates erfolgt unter Luftabschluss in luftdicht verschlossenen Flaschen, Beuteln, Kanistern oder Fässern.
Die Applikation ist aufgrund der guten Wasserlöslichkeit des Präparates und einer damit verbundenen guten Suspendierbarkeit des Mikroorganismus bzw. seiner bevorzugt verwendeten Organe in der Spritzbrühe einfach und kann mittels Sprühverfahren oder durch Injektion in das Bewässerungssystem durchgeführt werden, was eine gleichmäßige Verteilung des wirksamen Agens im Boden, an der Pflanze oder an den zu bekämpfenden Schadorganismen gewährleistet. Zusammenfassend wird festgestellt, dass sich das erfindungsgemäße Präparat durch eine leicht handhabbare Lagerung bei Zimmertemperatur, problemlosen Transport, einfache Herstellung und Anwendung auszeichnet.

Anschließend wird die Erfindung an Ausführungsbeispielen näher erläutert.

### Beispiel 1

Der Pilz *Paecilomyces lilacinus* wurde an einem geeigneten festen Substrat unter axenischen Bedingungen kultiviert. Im Anschluss an die Kultur wurde das Kultursubstrat mit den sich daran befindlichen Konidien des Pilzes getrocknet.

Die Konidien wurden dann mit Hilfe eines Windsicht- und Filtrationsverfahrens vom trockenen Kultursubstrat getrennt. Sie enthielten zu diesem Zeitpunkt eine Restfeuchte von 8,3 %. 80 g des getrockneten Konidienpulvers, das eine Konzentration von 2,8 x 10¹¹ Konidien pro Gramm aufwies, wurde in 100 ml polyethermodifiziertem Trisiloxan, Handelspräparat Break-Thru S240, suspendiert. Das resultierende flüssige Präparat enthielt 1,41 x 10¹¹ Konidien pro Milliliter und 1,37 x 10¹¹ lebende Konidien pro Milliliter. Diese entspricht einer Konzentration lebender Konidien im flüssigen Präparat von 97,24 %.

Das flüssige Präparat wurde bei Zimmertemperatur (20-22°C) inkubiert, wobei die Keimfähigkeit der Konidien von *Paecilomyces lilacinus* im monatlichen Abstand bestimmt wurde. Zur Untersuchung der Keimfähigkeit wurden regelmäßig Proben entnommen, im Verhältnis 1:10000 mit Wasser gemischt, 5 Stunden in dieser Mischung inkubiert und mit 0,1 ml auf einen geeigneten Agar-Nährboden ausgestrichen. Die Agarplatten wurden sodann für 24 Stunden bei 25 °C inkubiert und dann unter dem Mikroskop untersucht. Dabei wurde die Zahl der gekeimten Konidien, die durch die Bildung eines Keimschlauches deutlich erkennbar sind, bestimmt und mit der Zahl der nicht gekeimten Konidien ins Verhältnis gesetzt. Die Ergebnisse der Auszählungen sind in folgender Tabelle dargestellt.

**Tabelle 1: Lagerstabilität der erfindungsgemäßen Flüssigformulierung der Konidien von**

| *Paecilomyces lilacinus* | |
|---|---|
| Lagerdauer | gekeimte Konidien in % |
| 4 Wochen | 97,2 |
| 2 Monate | 97,4 |
| 3 Monate | 95,4 |
| 4 Monate | 95,8 |
| 5 Monate | 95,1 |
| 6 Monate | 94,1 |
| 7 Monate | 94,7 |
| 8 Monate | 93,0 |
| 9 Monate | 94,1 |
| 10 Monate | 93,5 |
| 11 Monate | 92,8 |
| 12 Monate | 92,3 |

### Beispiel 2

Mit Hilfe eines Gefäßversuches wurde die Wirkung eines auf der Grundlage von *Paecilomyces lilacinus* hergestellten flüssigen Präparates auf die Population des Wurzelgallennematoden (*Metoidogyne incognita*) im Boden sowie auf die durch den Nematoden verursachten Symptome an Tomatenwurzeln untersucht.

Es wurde ein flüssiges Präparat wie in Beispiel 1 mit exakt 1 x 10¹¹ lebenden Pilzkonidien pro Milliliter verwendet. Die Töpfe wurden mit je 1000 ml Boden gefüllt und mit je 5000 Eier und Larven von *Metoidogyne ingognita* inokuliert. Dazu wurden Löcher in den Boden gedrückt, in die die Nemododensuspension einpipettiert wurde. Die Applikation des flüssigen Präparates erfolgte am Tag nach der Inokulation. Dazu wurde 10 Milliliter des flüssigen Präparats in 10 Liter Wasser eingemischt. Von der entstandenen Konidiensuspension wurden je Topf 10 ml verabreicht. Im Anschluss daran wurden die Töpfe so lange gewässert, bis der Boden gesättigt war. Die verwendete Aufwandmenge entspricht einer Menge des flüssigen Präparates von 0,01 ml pro Topf oder einer Konidienkonzentration von 1 x 10⁹ Konidien pro Topf.

7 Tage nach der Behandlung wurden ca. 15 cm hohe Tomatenpflanzen in die Töpfe gepflanzt. Die Behandlung wurde zunächst 3 Wochen nach der Pflanzung und dann im Abstand von 4 Wochen insgesamt 3mal wiederholt. Die Auswertung des Versuches erfolgte 14 Wochen nach der Pflanzung (3 Wochen nach der letzten Applikation). Als Kontrolle wurde eine unbehandelte Variante mitgeprüft. Beide Varianten, behandelt und unbehandelt, wurden mit 8 Wiederholungen angesetzt. Das Ergebnis des Versuches wird in Tabelle 2 gezeigt.

**Tabelle 2: Einfluss eines flüssigen Präparates, bestehend aus den Konidien von Paecilomyces lilacinus suspendiert in polyethermodifiziertem Trisiloxan Break-Thru S 240, auf die Vermehrung von Meloidogyne incognita sowie auf die durch die Nematoden bewirkten Symptome an den Wurzeln**

| | Zahl der Ei-Massen vom *M*. *incognita* pro Wurzel | Symptomausprägung nach einer Boniturskala von 0 bis 10* |
|---|---|---|
| mit dem flüssigen Präparat behandelte Töpfe | 49 | 1,2 |
| nicht behandelte Töpfe | 355 | 5,3 |

| | | |
|---|---|---|
| *) Boniturskala: 0 = keine Symptome, 10 = Pflanze abgestorben | | |

### Beispiel 3

Der Pilz *Nomuraea rileyi* wurde an einem geeigneten festen Substrat unter axenischen Bedingungen kultiviert. Im Anschluss an die Kultur wurde das Kultursubstrat mit den sich daran befindlichen Konidien des Pilzes getrocknet.

Die Konidien wurden dann mit Hilfe eines Windsicht- und Filtrationsverfahrens vom trocknen Kultursubstrat getrennt. Sie enthielten zu diesem Zeitpunkt eine Restfeuchte von 9,2 %. 7 g des getrockneten Konidienpulvers, das eine Konzentration von 8,03 x 10¹⁰ Konidien pro Gramm aufwies, wurden in 100 ml mit Propylen glycol n-butyl ether modifiziertem Trisiloxan suspendiert. Das resultierende flüssige Präparat enthielt 5,62 x 10⁹ Konidien pro Milliliter und 5,19 x 10⁹ lebende Konidien pro Milliliter. Dies entspricht einer Konzentration lebender Konidien im flüssigen Präparat von 92,35 %.

Das flüssige Präparat wurde bei Zimmertemperatur (20-22°C) inkubiert wobei die Keimfähigkeit der Konidien von *Nomurea rileyi* im monatlichen Abstand bestimmt wurde. Zur Untersuchung der Keimfähigkeit wurden regelmäßig Proben entnommen, im Verhältnis 1:2000 mit Wasser gemischt, 5 Stunden in dieser Mischung inkubiert und mit 0,1 ml auf einen geeigneten Agar-Nährboden ausgestrichen. Die Agarplatten wurden sodann für 40 Stunden bei 25 °C inkubiert und dann unter dem Mikroskop untersucht. Dabei wurde die Zahl der gekeimten Konidien, die durch die Bildung eines Keimschlauches deutlich erkennbar sind, bestimmt und mit der Zahl der nicht gekeimten Konidien ins Verhältnis gesetzt. Die Ergebnisse der Auszählungen sind in Tabelle 3 dargestellt.

**Tabelle 3: Lagerstabilität der erfindungsgemäßen Flüssigformulierung der Konidien von**

| *Nomurea rileyi* | |
|---|---|
| Lagerdauer | gekeimte Konidien in % |
| 4 Wochen | 91,3 |
| 2 Monate | 91,5 |
| 3 Monate | 90,3 |
| 4 Monate | 88,8 |
| 5 Monate | 89,5 |
| 6 Monate | 88,1 |
| 7 Monate | 87,1 |
| 8 Monate | 85,3 |
| 9 Monate | 85,9 |
| 10 Monate | 86,7 |
| 11 Monate | 84,0 |
| 12 Monate | 85,2 |

### Beispiel 4

In einem Laborversuch wurden Larven von *Spodoptera exigua* unter Verwendung einer speziell zusammengestellten Diät in kleinen Plexiglasgefäßen (Grundfläche: 174 mm²) bei einer relativen Luftfeuchte von 75 % und einer Temperatur von 26 °C +/-2 °C gehalten. 5 Tage nach dem Schlupf (2. Larvenstadium) wurden die Larven mit dem erfindungsgemäßen Sporenprodukt behandelt. Dazu wurde ein flüssiges Präparat mit exakt 5 x 10⁹ lebenden Pilzkonidien pro Milliliter in mit Tripropylen glycol methyl ether modifiziertem Trisiloxan verwendet. Für die Herstellung der Sprühsuspension wurden 10 ml bzw. 2 ml dieses flüssigen Präparates in 4 I Wasser eingemischt. Von der entstehenden Sporensuspension wurden 4 ml auf eine Fläche von 100 cm² aufgesprüht. Das entspricht einer Aufwandmenge an Spritzbrühe von 1000 ml bzw. 200 ml des flüssigen Präparates pro Hektar eingemischt in jeweils 400 Liter Wasser pro Hektar. Die kleinen Gefäße, in denen die Larven inkubiert wurden, befanden sich zum Zeitpunkt der Applikation auf der Fläche, über der der Sprühnebel ausgebracht wurde. Die Auswertung des Versuches erfolgte 1, 3 und 7 Tage nach der Behandlung, indem die Zahl der toten Larven ermittelt und der Mortalitätsgrad bestimmt wurde. Insgesamt wurden 10 Larven je Gefäß und 3 Gefäße je Versuchsvariante geprüft.

**Tabelle 4: Mortalität der Larven von Spodoptera exigua nach Behandlung mit einem in Wasser gelösten flüssigen Präparates, bestehend aus den Konidien des Pilzes Nomuraea rileyi suspendiert in Tripropylen glycol methyl ether modifiziertem Trisiloxan.**

| Behandlung | Aufwandmenge | Mortalität nach 1 Tag | Mortalität nach 3 Tagen | Mortalität nach 7 Tagen |
|---|---|---|---|---|
| unbehandelte Variante | 0 | 0,00 % | 0,00 % | 9,37 % |
| Flüssiges Präparat mit den Konidien von Nomurea rileyi | 200 ml/ha | 25,00 % | 90,62 % | 100,00 % |
| Flüssiges Präparat mit den Konidien von Nomurea rileyi | 1000 ml/ha | 68,00 % | 100,00 | 100,00 % |

### Literatur

Anonymus (2005): Vom Wirkstoff zum Produkt - die Formulierung macht's. KURIER, Das Bayer CropScience Magazin für moderna Landwirtschaft 5 (1): 6-9
Akbar W, Lord JC, Nechols JR, Loughind TM (2005): Efficacy of Beauveria bassiana for Red Flour Beetle When Applied with Plant Essential Oils or in Mineral Oil and Organosilicone Carriers. Journal of Economic Entomology 98 (3): 683-688
Gatarayiha MC, Laing MD, Miller RM (2010): Effects of adjuvant and conidial concentration on the efficacy of Beauveria bassiana for the control of the two spotted spider mite, Tetranychus urticae. Experimental and Applied Acarology 50 (3): 217-229
Legaspi JC, Poprawski TJ, Legaspi BC Jr. (2000): Laboratory and field evaluation of Beauveria bassiana against sugarcane stalkborers (Lepidoptera: Pyralidae) in the lower Rio Grande Valley of Texas. J Econ Entomol. 93 (1): 54-9.
Wekesa VW, Maniania NK, Knapp M, Boga HI (2005): Pathogenicity of Beauveria bassiana and Metarhizium anisopliae to the tobacco spider mite Tetranychus evansi. Experimental and Applied Acarology 36 (1-2): 41-50

## Patentansprüche

1. Lagerfähiges flüssiges Präparat für den biologischen Pflanzenschutz bestehend aus einer wasserlöslichen Suspension, die Pilzsporen, Pilzkonidien, Chlamydosporen oder Sklerotien eines Pilzes oder eine Mischung daraus und ein polyethermodifiziertes Trisiloxan umfasst.

2. Flüssiges Präparat nach Anspruch 1, **dadurch gekennzeichnet, dass** der den Pilzsporen, Pilzkonidien, Chlamydosporen oder Sklerotien zugrunde liegende Pilz oder die zugrunde liegenden Pilze eine gegen Pflanzenkrankheitserreger gerichtete antagonistische und/oder hyperparasitäre Wirkung aufweisen oder dass der Pilz oder die Mischung aus Pilzen eine sich an Pflanzen manifestierende Resistenz induzierende Wirkung, Stresstoleranz induzierende Wirkung oder eine die Nährstoffverfügbarkeit erhöhende Wirkung aufweist.

3. Verfahren zur Herstellung eines flüssigen Präparates gemäß Anspruch 1 oder 2 **dadurch gekennzeichnet, dass** man einen Pilz kultiviert, und im Anschluss daran die gebildeten Sporen, Konidien, Chlamydosporen oder Sklerotien in einem polyethermodifiziertem Trisiloxan suspendiert.

4. Flüssiges Präparat nach Anspruch 1 oder 2, **dadurch gekennzeichnet, dass** das polyethermodifizierte Trisiloxan Break-Thru® S240 ist.

5. Verfahren nach Anspruch 3, **dadurch gekennzeichnet, dass** das polyethermodifizierte Trisiloxan Break-Thru® S240 ist.

6. Verfahren nach Anspruch 3 und 5 , **dadurch gekennzeichnet, dass** man die Sporen, Konidien, Chlamydosporen oder Sklerotien durch Mahl- und/oder Dispergierverfahren aufbereitet.

7. Verfahren nach Anspruch 6, **dadurch gekennzeichnet, dass** man die Sporen, Konidien, Chlamydosporen oder Sklerotien nach der Aufbereitung durch Sieb-, Filtrations-, Windsicht oder Zentrifugationsverfahren isoliert.

8. Flüssiges Präparat nach einem der Ansprüche 1, 2 und 4, **dadurch gekennzeichnet, dass** die Pilzarten *Ampelomyces quisqualis, Beauveria bassiana, Beauveria brongniartii, Clonostachys rosea, Coniothyrium minitans, Gliocladium catenulatum, Isaria spp., Laetisaria arvalis, Lecanicillium lecanii, Lecanicillium muscarium, Metarhizium anisopliae, Nomuraea rileyi, Paecilomyces lilacinus, Phoma macrostoma, Pythium oligandrum, Talaromyces flavus, Teratosperma oligociadum, Trichoderma spp., Verticillium biguttatum* eingesetzt werden.

9. Flüssiges Präparat nach Anspruch 8, wobei die Pilzart *Paecilomyces lilacinus* ist.

10. Verfahren nach einem der Ansprüche 3, 5, 6 und 7, **dadurch gekennzeichnet, dass** die Pilzarten *Ampelomyces quisqualis, Beauveria bassiana, Beauveria brongniartii, Clonostachys rosea, Coniothyrium minitans, Gliocladium catenulatum, Isaria spp., Laetisaria arvalis, Lecanicillium lecanii, Lecanicillium muscarium, Metarhizium anisopliae, Nomuraea rileyi, Paecilomyces lilacinus, Phoma macrostoma, Pythium oligandrum, Talaromyces flavus, Teratosperma oligociadum, Trichoderma spp., Verticillium biguttatum* eingesetzt werden .

11. Verfahren nach Anspruch 10, wobei die Pilzart *Paecilomyces lilacinus* ist.

12. Flüssiges Präparat nach einem der Ansprüch 1, 2, 4, 8 und 9 , **dadurch gekennzeichnet, dass** die Pilzsporen, Pilzkonidien, Chlamydosporen oder Sklerotien eines Pilzes eine aus mehreren Pilzen stammende Mischung ist.

13. Verwendung eines flüssigen Präparates gemäß einem der Ansprüche 1, 2, 4, 8, 9 und 12 durch Einmischen in den Boden, Applikation auf/an die Pflanze oder Saatgutbehandlung.

14. Verwendung gemäß Anspruch 13, **dadurch gekennzeichnet, dass** man das flüssige Präparat je nach Anwendungszweck mit Wasser auf die gewünschte Anwendungskonzentration verdünnt.

15. Verwendung von polyether-modifiziertem Trisiloxan als Lager- oder Suspensionsmittel für für den biologischen Pflanzenschutz bestimmten Pilzsporen, Pilzkonidien, Chlamydosporen oder Sklerotien.

## Claims

1. Storable liquid preparation for biological plant protection consisting of a water-soluble suspension comprising fungal spores, fungal conidia, chlamydospores or sclerotia of a fungus or a mixture thereof and a polyether-modified trisiloxane.

2. Liquid preparation according to Claim 1, **characterized in that** the fungus underlying the fungal spores, fungal conidia, chlamydospores or sclerotia or the underlying fungi have an antagonistic and/or hyperparasitic action directed against plant pathogens or **in that** the fungus or the mixture of fungi has a resistance-inducing action and/or stress tolerance-inducing action which manifests on plants or a nutrient availability-increasing action.

3. Method for producing a liquid preparation according to Claim 1 or 2, **characterized in that** a fungus is cultured and the spores, conidia, chlamydospores or sclerotia which are formed are then suspended in a polyether-modified trisiloxane.

4. Liquid preparation according to Claim 1 or 2, **characterized in that** the polyether-modified trisiloxane is Break-Thru® S240.

5. Method according to Claim 3, **characterized in that** the polyether-modified trisiloxane is Break-Thru® S240.

6. Method according to Claims 3 and 5, **characterized in that** the spores, conidia, chlamydospores or sclerotia are processed by means of milling and/or dispersion methods.

7. Method according to Claim 6, **characterized in that** the spores, conidia, chlamydospores or sclerotia are isolated after processing by sieving, filtration, air-classification or centrifugation methods.

8. Liquid preparation according to any of Claims 1, 2 and 4, **characterized in that** the fungal species *Ampelomyces quisqualis, Beauveria bassiana, Beauveria brongniartii, Clonostachys rosea, Coniothyrium minitans, Gliocladium catenulatum, Isaria* spp., *Laetisaria arvalis, Lecanicillium lecanii, Lecanicillium muscarium, Metarhizium anisopliae, Nomurea rileyi, Paecilomyces lilacinus, Phoma macrostoma, Pythium oligandrum, Talaromyces flavus, Teratosperma oligocladum, Trichoderma* spp., *Verticillium biguttatum* are used.

9. Liquid preparation according to Claim 8, wherein the fungal species is *Paecilomyces lilacinus.*

10. Method according to any of Claims 3, 5, 6 and 7, **characterized in that** the fungal species *Ampelomyces quisqualis, Beauveria bassiana, Beauveria brongniartii, Clonostachys rosea, Coniothyrium minitans, Gliocladium catenulatum, Isaria* spp., *Laetisaria arvalis, Lecanicillium lecanii, Lecanicillium muscarium, Metarhizium anisopliae, Nomurea rileyi, Paecilomyces lilacinus, Phoma macrostoma, Pythium oligandrum, Talaromyces flavus, Teratosperma oligocladum, Trichoderma* spp., *Verticillium biguttatum* are used.

11. Method according to Claim 10, wherein the fungal species is *Paecilomyces lilacinus.*

12. Liquid preparation according to any of Claims 1, 2, 4, 8 and 9, **characterized in that** the fungal spores, fungal conidia, chlamydospores or sclerotia of a fungus are a mixture originating from multiple fungi.

13. Use of a liquid preparation according to any of Claims 1, 2, 4, 8, 9 and 12 by mixing into the soil, application to/on the plant, or seed treatment.

14. Use according to Claim 13, **characterized in that** the liquid preparation is diluted with water to the desired application concentration depending on the intended use.

15. Use of polyether-modified trisiloxane as storage or suspension agent for fungal spores, fungal conidia, chlamydospores or sclerotia intended for biological plant protection.

## Revendications

1. Préparation liquide apte au stockage pour la protection biologique de plantes, constituée par une suspension soluble dans l'eau, qui comprend des spores de champignon, des conidies de champignon, des chlamydospores ou des sclérotes de champignon ou un mélange de ceux-ci et un trisiloxane modifié par un polyéther.

2. Préparation liquide selon la revendication 1, **caractérisée en ce que** le champignon ou les champignons à la base des spores de champignon, des conidies de champignon, des chlamydospores ou des sclérotes présente une action antagoniste et/ou hyper-parasitaire dirigée contre des agents pathogènes des plantes ou **en ce que** le champignon ou le mélange de champignons présente une action induisant une résistance qui se manifeste sur les plantes, une action induisant une tolérance au stress ou une action augmentant la disponibilité de nutriments.

3. Procédé de fabrication d'une préparation liquide selon la revendication 1 ou 2, **caractérisé en ce qu'**un champignon est cultivé, et les spores, les conidies, les chlamydospores ou les sclérotes ensuite formés sont suspendus dans un trisiloxane modifié par un polyéther.

4. Préparation liquide selon la revendication 1 ou 2, **caractérisée en ce que** le trisiloxane modifié par un polyéther est Break-Thru® S240.

5. Procédé selon la revendication 3, **caractérisé en ce que** le trisiloxane modifié par un polyéther est Break-Thru® S240.

6. Procédé selon les revendications 3 et 5, **caractérisé en ce que** les spores, les conidies, les chlamydospores ou les sclérotes sont préparés par des procédés de broyage et/ou de dispersion.

7. Procédé selon la revendication 6, **caractérisé en ce que** les spores, les conidies, les chlamydospores ou les sclérotes sont isolés après la préparation par des procédés de tamisage, filtration, turboséparation ou centrifugation.

8. Préparation liquide selon l'une quelconque des revendications 1, 2 et 4, **caractérisée en ce que** les variétés de champignons *Ampelomyces quisqualis, Beauveria bassiana, Beauveria brongniartii, Clonostachys rosea, Coniothyrium minitans, Gliocladium catenulatum, Isaria spp., Laetisaria arvalis, Lecanicillium lecanii, Lecanicillium muscarium, Metarhizium anisopliae, Nomuraea rileyi, Paecilomyces lilacinus, Phoma macrostoma, Pythium oligandrum, Talaromyces flavus, Teratosperma oligociadum, Trichoderma spp., Verticillium biguttatum* sont utilisées.

9. Préparation liquide selon la revendication 8, dans laquelle la variété de champignon est *Paecilomyces lilacinus.*

10. Procédé selon l'une quelconque des revendications 3, 5, 6 et 7, **caractérisé en ce que** les variétés de champignons *Ampelomyces quisqualis, Beauveria bassiana, Beauveria brongniartii, Clonostachys rosea, Coniothyrium minitans, Gliocladium catenulatum, Isaria spp., Laetisaria arvalis, Lecanicillium lecanii, Lecanicillium muscarium, Metarhizium anisopliae, Nomuraea rileyi, Paecilomyces lilacinus, Phoma macrostoma, Pythium oligandrum, Talaromyces flavus, Teratosperma oligociadum, Trichoderma spp., verticillium biguttatum* sont utilisées.

11. Procédé selon la revendication 10, dans lequel la variété de champignon est *Paecilomyces lilacinus.*

12. Préparation liquide selon l'une quelconque des revendications 1, 2, 4, 8 et 9, **caractérisée en ce que** les spores de champignon, les conidies de champignon, les chlamydospores ou les sclérotes de champignon sont un mélange issu de plusieurs champignons.

13. Utilisation d'une préparation liquide selon l'une quelconque des revendications 1, 2, 4, 8, 9 et 12 par incorporation dans le sol, application sur la plante ou traitement des graines.

14. Utilisation selon la revendication 13, **caractérisée en ce que** la préparation liquide est diluée selon l'application avec de l'eau à la concentration d'application souhaitée.

15. Utilisation de trisiloxane modifié par un polyéther en tant qu'agent de stockage ou de suspension pour des spores de champignon, des conidies de champignon, des chlamydospores ou des sclérotes destinés à la protection biologique de plantes.
